# FASCICULE DE BREVET EUROPEEN

(11) **EP 3 296 087 B1**
(45) Date de publication et mention de la délivrance du brevet: **30.01.2019**
(21) Numéro de dépôt: 17190362.8
(22) Date de dépôt: 11.09.2017
(51) Int. Cl.: B29C 70/44, B29C 70/54, B29C 70/34, B29C 43/12

(54) **PROCEDE DE FABRICATION D'UNE PIECE EN MATERIAU COMPOSITE**
HERSTELLUNGSVERFAHREN EINES VERBUNDWERKSTÜCKS
METHOD FOR MANUFACTURING A PART MADE OF COMPOSITE MATERIAL

(30) Priorité: 20.09.2016 FR 1658812
(43) Date de publication de la demande: 21.03.2018
(73) Titulaire: Airbus Operations S.A.S., 31060 Toulouse (FR)
(72) Inventeur: MORICET, Philippe, 44640 LE PELLERIN (FR); PRIDIE, Jago, 44000 NANTES (FR)
(74) Mandataire: Gicquel, Olivier Yves Gérard

(56) Documents cités:
- FR-A1- 2 961 739
- US-A- 5 106 568

## Description

La présente invention se rapporte à un procédé de fabrication d'une pièce en matériau composite visant à limiter les effets de bord.

Une pièce en matériau composite est constituée de fibres noyées dans une matrice en résine.

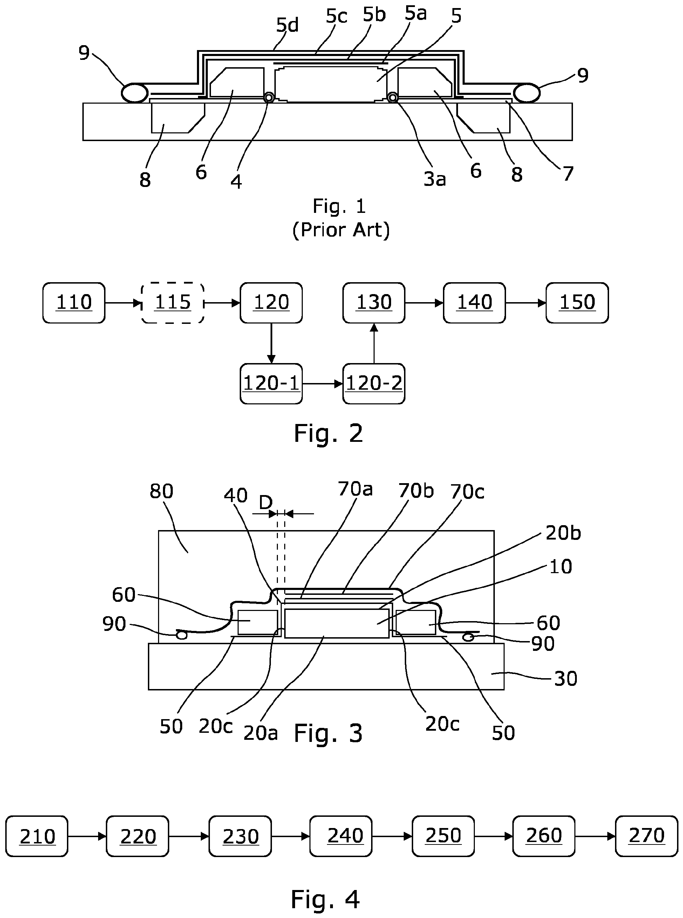

Selon un mode de réalisation connu, visible à la figure 1, une pièce en matériau composite peut être réalisée à partir d'un renfort fibreux (qui peut être en carbone, en aramide, ou tout autre matériau adapté) pré-imprégnées de résine (epoxy ou polyester ou similaire). Dans une première phase dite de drapage, les plis pré-imprégnés sont disposés sur une contre-forme afin de former une pièce préliminaire 1 appelée préforme ou ébauche. La pièce préliminaire 1 peut ensuite être pré-consolidée sous vide dans une étape optionnelle dite de compactage. Dans une phase suivante, dite d'habillage, la pièce préliminaire 1 est disposée sur un outillage 2. Un joint 3 enrobé d'un tissu drainant 4 est arrangé autour de la pièce préliminaire 1 avant qu'elle ne soit enserrée par un premier puis par un deuxième jeu de cales et recouverte d'un empilement 5 de films (appelé habillage).

L'habillage comprend :
- une pièce de tissu à délaminer 5a, disposée uniquement sur pièce préliminaire 1,
- un film étanche 5b couvrant le tissu à délaminer 5a, le joint 3a enrobé de tissu drainant 4 et le premier jeu de cales 6, dites de bordurage, disposées sur un grillage 7 en Téflon®,
- un tissu drainant 5c couvrant le film étanche 5b et le deuxième jeu de cales 8, dites de clampage, disposées sous le grillage 7, et
- une bâche 5d, aussi appelée "vessie", recouvrant l'ensemble et fixée à des joints 9 afin d'assurer l'étanchéité de l'habillage.

Durant une troisième phase, dite de polymérisation, la pièce préliminaire 1 habillée est disposée dans une enceinte mise au vide et soumise à un cycle de température et de pression afin d'être consolidée et obtenir une pièce dite pièce brute (non représentée) en matériau composite. Classiquement, et tel que décrit dans le document US 5106568 A, ce cycle de température et de pression comprend une première montée en température de la température ambiante jusqu'à un premier palier de température et une deuxième montée en température jusqu'à un deuxième palier de température. La dernière phase de la polymérisation est le refroidissement de la pièce réalisée jusqu'à une température minimum de démoulage. La pression est appliquée dès la première montée en température jusqu'à la fin du cycle.

Après polymérisation, la pièce brute est démoulée et contrôlée (défectivité, état de surface et dimensions).

Classiquement, le contrôle d'une pièce brute comprend une mesure des différentes dimensions (largeur, longueur, épaisseur au centre et sur les chants) de la pièce composite ainsi qu'une mesure de la défectivité réalisée avec une technique CND (pour "Contrôle Non Destructif'), à l'aide, par exemple, d'un équipement ultra-sons (selon une méthode telle que décrite dans le document FR1459875).

La polymérisation d'une pièce en matériau composite constituée de fibres noyées dans une matrice en résine peut générer un phénomène appelé "effet de bord" qui caractérise une pièce dont l'épaisseur en périphérie est inférieure à l'épaisseur souhaitée. Ce phénomène est la conséquence du fluage de la résine au cours de la polymérisation, lorsque celle-ci est compactée, par l'application de la pression.

Selon les dimensions de la pièce en matériau composite, la nature de la résine et le procédé de polymérisation utilisé, la zone périphérique impactée par l'effet de bord est plus ou moins importante.

Afin de répondre aux tolérances d'assemblage il est souvent nécessaire d'ajouter une étape d'usinage de la pièce brute afin d'obtenir une pièce composite finie aux dimensions souhaitées. Cette étape vise à supprimer la zone périphérique et de ne conserver que la portion centrale d'épaisseur constante.

Il est donc indispensable de draper une pièce préliminaire 1 dont les dimensions sont supérieures aux dimensions souhaitées de la pièce composite finie en prévision de l'étape d'usinage.

Ce phénomène d'effet de bord a donc un impact fort sur le coût final de la pièce (temps de drapage, perte matière, étape supplémentaire d'usinage).

Le document FR2961739 propose un procédé d'obtention d'une pièce composite visant à limiter les effets de bord. Ce procédé comprend une étape préalable à la polymérisation, d'ajout de plis pré-imprégnés en périphérie de la préforme composite 1 afin de compenser la variation d'épaisseur générée par le phénomène d'effet de bord. Ce procédé nécessite de connaitre la superficie de la zone périphérique impactée afin de déterminer le nombre de plis devant être ajoutés. Si le nombre de plis pré-imprégnés est insuffisant ou trop important, l'étape d'usinage de la préforme polymérisée sera quand même nécessaire. Ce procédé est couteux en temps et en matière première.

La présente invention propose un procédé de fabrication d'une pièce en matériau composite qui ne présente pas les inconvénients de l'art antérieur.

A cet effet, la présente invention est un procédé de fabrication d'une pièce composite à partir d'une pluralité de plis de fibres noyées dans une résine, conformément à la revendication 1, le procédé comprenant les étapes suivantes :
- réalisation d'une pièce préliminaire par drapage dans un moule, de la pluralité de plis de fibres ;
- habillage de la pièce préliminaire ;
- polymérisation de la pièce préliminaire disposée dans une enceinte équipée d'un dispositif de mesure de la température T à l'intérieur de l'enceinte ;
- démoulage de la pièce préliminaire ;
- contrôle des dimensions et de la défectivité.

Le procédé selon l'invention est remarquable en ce que l'étape de polymérisation comprend l'application d'une pression P dans l'enceinte dès que la température T est supérieure ou égale à une température seuil prédéterminée.

Ainsi, la pression est appliquée sur la pièce préliminaire lorsque la viscosité de la résine est à une valeur supérieure à la valeur de la viscosité à laquelle est appliquée la pression dans le procédé de l'art antérieur. Une telle valeur de viscosité permet de réduire l'effet de la pression sur la résine et donc le phénomène appelé "effet de bord".

Avantageusement, l'étape d'habillage du procédé selon l'invention comprenant les sous-étapes suivantes, de dépose sur la pièce préliminaire, d'un tissu à délaminer et de cales de bordurage, d'un film étanche, d'un jeu de cales de clampage, d'un tissu drainant et d'une bâche, le procédé comprend également les sous-étapes préliminaires suivantes :
- dépose d'un morceau de tissu à délaminer sur une face libre et sur les chants de la pièce préliminaire, les dimensions du tissu à délaminer étant supérieures aux dimensions de la pièce préliminaire afin que le tissu à délaminer recouvre l'intégralité de la face libre, l'intégralité des chants de la pièce préliminaire et une portion de la table ; et
- disposition d'un jeu de cales de bordurage sur la portion du morceau de tissu à délaminer qui recouvre la table de l'outillage.

La température seuil du procédé selon l'invention est déterminée par une table de référence prenant en compte les dimensions critiques de la pièce composite et la défectivité exigée pour ladite pièce composite.

Selon une variante de réalisation, la pièce préliminaire subit une étape de pré-consolidation sous vide, appelée compactage, avant l'étape d'habillage.

Selon encore une variante de réalisation, une plage de température d'essai est définie par des mesures du défoisonnement (évacuation de l'air emprisonné lors l'étape de drapage) de la matière selon le cycle de température appliqué.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1, déjà décrite, est un schéma d'une étape d'un procédé de fabrication d'une pièce composite selon l'art antérieur,
- la figure 2 est une vue illustrant les étapes d'un procédé de fabrication d'une pièce composite selon un mode de réalisation Préféré de l'invention,
- la figure 3 est un schéma illustrant un détail d'une étape du procédé selon un mode de réalisation préféré de l'invention, et
- la figure 4 est une vue illustrant une méthode de réalisation d'une étape du procédé selon un mode de réalisation préféré de l'invention.

La figure 2 représente un procédé 100 de fabrication d'une pièce composite (non représentée) selon un mode de réalisation préféré de l'invention. Le procédé 100 comprend une première étape 110 de drapage sur une contre-forme, d'une pluralité de plis de fibres (en carbone ou en aramide, par exemple) pré-imprégnées (avec une résine époxy ou polyester, par exemple) pour former une pièce préliminaire 10. Cette étape 110 est identique à l'étape de drapage de l'art antérieur et ne sera pas plus décrite.

Selon une variante de réalisation, le procédé comprend une étape 115 de compactage, identique à l'étape de compactage décrite dans l'art antérieure.

Le procédé 100 comprend une étape d'habillage 120 de la pièce préliminaire 10. Au cours de l'étape d'habillage 120, illustrée sur la figure 3, la pièce préliminaire 10 est disposée, par une de ses faces, dite face de contact 20a, sur une table 30 et recouverte sur une face libre 20b, opposée à la face de contact 20a, d'un ensemble de films.

L'étape d'habillage 120 comprend une première sous-étape d'habillage 120-1 qui consiste à déposer un morceau de tissu à délaminer 40 (tel que Dry peel ply for general application 60 BR de chez Tygavac®) sur la face libre 20a et sur les chants 20c de la pièce préliminaire 10. Comme illustré sur la figure 3, les dimensions du morceau de tissu à délaminer 40 sont supérieures aux dimensions de la pièce préliminaire 10 afin que la périphérie du morceau de tissu recouvre l'intégralité de la face libre 20b, l'intégralité des chants 20c de la pièce préliminaire 10 et recouvre la table 30 de l'outillage sur une portion 50.

L'étape d'habillage 120 comprend une deuxième sous-étape d'habillage 120-2 qui consiste à disposer un jeu de cales de bordurage 60 sur la portion 50 du morceau de tissu à délaminer 40 qui recouvre la table 30. Les cales de bordurage 60 sont ainsi positionnées à une distance D des chants 20c de la pièce préliminaire 10 recouverts de tissu à délaminer 40. La distance D est déterminée en fonction de la dilatation de la cale lors du cycle de polymérisation afin que la cale de bordurage 60 affleure avec le chant 20c lors de la polymérisation.

L'étape d'habillage 120 comprend également les sous-étapes, déjà présentes dans l'art antérieur, qui consistent à disposer, successivement sur l'ensemble formé par la pièce préliminaire 10, le tissu à délaminer 40 et les cales de bordurage 60, un tissu perforé 70a, un jeu de cales de clampage (non représentées) puis un tissu drainant 70b et enfin une bâche 70c fixée à la table 30 par des joints d'étanchéité 90, réalisés avec du mastic par exemple.

Le procédé 100 selon un mode de réalisation préféré de l'invention comprend une étape de polymérisation 130 de la pièce préliminaire 10 disposée dans une enceinte 80 d'un équipement de type autoclave. Une telle enceinte 80 est équipée d'un dispositif de mesure de la température T à l'intérieur de l'enceinte 80.

Cette étape de polymérisation 130 comprend un cycle de température et de pression, appliqué sur la pièce préliminaire 10 présente dans l'enceinte 80. Ce cycle de température est identique à celui de l'art antérieur.

Dans le procédé 100 selon un mode de réalisation préféré de l'invention, une pression P est appliquée à la pièce préliminaire 10 dès que la température T à l'intérieur de l'enceinte 80 a atteint une valeur seuil Ts.

Le procédé 100 comprend également une étape 140 de démoulage de la pièce préliminaire 10 devenue pièce brute et une étape 150 de contrôle de la pièce brute 10. Ces étapes 140 et 150 sont identiques aux étapes de démoulage et de contrôle réalisées dans l'art antérieur et ne seront pas plus décrites.

Selon l'invention, la température seuil Ts est déterminée en confrontant le comportement au fluage de la résine à la valeur de défectivité Vd requise pour une utilisation prévue de la pièce composite.

Ainsi, la température seuil Ts est déterminée, à l'aide d'un outillage de presse (telle qu'une presse mécanique ou hydraulique par exemple), dont une table est équipée d'un moyen de chauffage, d'un capteur de force et de thermocouples en suivant les étapes ci-après, comme illustré sur la figure 4 :
- une étape de réalisation 210 d'une pièce préliminaire 10 référence identique à la pièce préliminaire 10,
- une étape d'application 220 sur la pièce préliminaire 10 référence d'une pression identique à la pression du cycle de polymérisation,
- une étape de montée en température 230 de la pièce préliminaire 10 référence,
- une étape de mesure 240 de la viscosité et de la température de la pièce préliminaire 10 référence, la viscosité est mesurée, par exemple, à travers la force exercée par la résine de la pièce préliminaire 10 sur le capteur de force,
- une étape de détermination 250 d'une plage de valeurs de température pour lesquelles la résine flue, c.à.d. les valeurs comprises entre une température T1 à partir de laquelle la viscosité mesurée décroit et une température T2 à partir de laquelle la viscosité mesurée se stabilise à une valeur dite valeur plateau,
- une étape de réalisation 260 d'une pluralité de pièce référence PR₁...PRₙ selon les étapes 110 à 140 décrites précédemment et pour lesquelles, lors de l'étape de polymérisation 130, la pression est appliquée dès que la température de l'enceinte 80 atteint une température référence TRᵢ...TRₙ dont la valeur est comprise entre T1 et T2, et
- une étape de mesure 270 de la défectivité et des épaisseurs au centre et au niveau des chants de chacune des pièces référence PR1...PRn.

Ainsi, une table de référence est construite. Cette table de référence présente des dimensions critiques telles que l'épaisseur au centre, les épaisseurs au niveau des chants et la défectivité mesurées en correspondance avec les températures TRi à TRn. La valeur de la température seuil Ts correspond à la température parmi TRi... TRn présentant le plus faible écart entre l'épaisseur au centre de la pièce et l'épaisseur des chants de la pièce (plus faible "effet de bord") tout en respectant la valeur de défectivité Vd exigée.

Selon une variante de réalisation, des mesures de foisonnement sont réalisées sur une série de pièces préliminaires composites subissant un cycle thermique afin de définir une plage de températures d'essai, préalablement à l'étape 220. Ces mesures de foisonnement peuvent également être réalisées sur les pièces références PR1...PRn.

A titre d'exemple, pour une pièce préliminaire 10 dont la résine est une résine epoxy, la température seuil Ts est de 100°C et la pression appliquée est de 7,5 bars.

Bien entendu, la présente invention n'est pas limitée au mode de réalisation décrit ci-dessus et est définie par l'objet des revendications attenantes.

## Revendications

1. Procédé (100) de fabrication d'une pièce composite à partir d'une pluralité de plis de fibres noyées dans une résine, le procédé (100) comprenant les étapes suivantes :
- réalisation d'une pièce préliminaire (10) par drapage (110) dans un moule, de la pluralité de plis de fibres
- habillage (120) de la pièce préliminaire (10)
- polymérisation (130) de la pièce préliminaire (10) disposée dans une enceinte (80) équipée d'un dispositif de mesure de la température T à l'intérieur de l'enceinte (80)
- démoulage (140) de la pièce préliminaire (10)
- contrôle (150) des dimensions et de la défectivité
le procédé étant **caractérisé en ce que** l'étape de polymérisation (130) comprend l'application d'une pression P dans l'enceinte (80) dès que la température T est supérieure ou égale à une température seuil (Ts) déterminée par une table de référence prenant en compte les dimensions critiques de la pièce composite et la défectivité exigée pour ladite pièce composite.

2. Procédé (100) selon la revendication 1, l'étape d'habillage comprenant les sous-étapes, de dépose (120) sur la pièce préliminaire (10), d'un tissu à délaminer (40) et de cales de bordurage (60), d'un film étanche (70a), d'un jeu de cales de clampage, d'un tissu drainant (70b) et d'une bâche (70c), le procédé (100) étant **caractérisé en ce que** l'étape d'habillage (120) comprend également les sous-étapes préliminaires suivantes :
- dépose (120-1) d'un morceau de tissu à délaminer (40) sur une face libre (20b) et sur les chants (20c) de la pièce préliminaire (10), les dimensions du tissu à délaminer (40) étant supérieures aux dimensions de la pièce préliminaire (10) afin que le tissu à délaminer (40) recouvre l'intégralité de la face libre (20b), l'intégralité des chants (20c) de la pièce préliminaire (10) et une portion (50) de la table (30) ; et
- disposition (120-2) d'un jeu de cales de bordurage (60) sur la portion (50) du morceau de tissu à délaminer (40) qui recouvre la table de l'outillage.

## Patentansprüche

1. Verfahren (100) zur Herstellung eines Verbundteils aus mehreren in ein Harz eingebetteten Lagen von Fasern, wobei das Verfahren (100) die folgenden Schritte umfasst:
- Realisierung eines Vorstufen-Teils (10) durch Drapieren (110) der mehreren Lagen von Fasern in einer Form,
- Umhüllung (120) des Vorstufen-Teils (10),
- Polymerisation (130) des Vorstufen-Teils (10), das in einem Raum (80) angeordnet ist, der mit einer Vorrichtung zur Messung der Temperatur T im Inneren des Raumes (80) ausgestattet ist,
- Entformen (140) des Vorstufen-Teils (10),
- Kontrolle (150) der Abmessungen und der Fehlerhaftigkeit,
wobei das Verfahren **dadurch gekennzeichnet ist, dass** der Schritt der Polymerisation (130) die Anwendung eines Drucks P in dem Raum (80) umfasst, sobald die Temperatur T höher oder gleich einer Schwellenwerttemperatur (Ts) ist, die durch eine Referenztabelle bestimmt wird, welche die kritischen Abmessungen des Verbundteils und die für das Verbundteil geforderte Fehlerhaftigkeit berücksichtigt.

2. Verfahren (100) nach Anspruch 1, wobei der Schritt der Umhüllung die Teilschritte des Auflegens (120), auf das Vorstufen-Teil (10), eines abziehbaren Gewebes (40) und von Umrandungsblöcken (60), einer dichten Folie (70a), eines Satzes von Klemmstücken, eines Drainagegewebes (70b) und einer Plane (70c) umfasst, wobei das Verfahren (100) **dadurch gekennzeichnet ist, dass** der Schritt der Umhüllung (120) außerdem die folgenden vorbereitenden Teilschritte umfasst:
- Auflegen (120-1) eines Stücks von abziehbarem Gewebe (40) auf eine freie Seite (20b) und auf die Seitenwangen (20c) des Vorstufen-Teils (10), wobei die Abmessungen des abziehbaren Gewebes (40) größer als die Abmessungen des Vorstufen-Teils (10) sind, damit das abziehbare Gewebe (40) die Gesamtheit der freien Fläche (20b), die Gesamtheit der Seitenwangen (20c) des Vorstufen-Teils (10) und einen Abschnitt (50) des Tisches (30) bedeckt; und
- Anordnung (120-2) eines Satzes von Umrandungsblöcken (60) auf dem Abschnitt (50) des Stücks von abziehbarem Gewebe (40), welcher den Werkzeugtisch bedeckt.

## Claims

1. Method (100) for manufacturing a composite component from a plurality of plies of fibres embedded in a resin, the method (100) comprising the following steps:
- forming a preliminary component (10) by draping (110) the plurality of fibre plies in a mould;
- laying up (120) the preliminary component (10);
- polymerizing (130) the preliminary component (10) arranged in an enclosure (80) equipped with a device for measuring the temperature T inside the enclosure (80);
- demoulding (140) the preliminary component (10);
- testing (150) the dimensions and defect rate,
the method being **characterized in that** the polymerization step (130) comprises the application of a pressure P in the enclosure (80) as soon as the temperature T is greater than or equal to a threshold temperature (Ts), determined by a reference table allowing for the critical dimensions of the composite component and the defect rate required for said composite component.

2. Method (100) according to Claim 1, the lay-up step comprising the sub-steps of laying (120) a release fabric (40) and edging wedges (60), an airtight film (70a), a set of clamping wedges, a drainage fabric (70b) and a cover sheet (70c) on the preliminary component (10), the method (100) being **characterized in that** the lay-up step (120) also comprises the following preliminary sub-steps:
- laying (120-1) a piece of release fabric (40) on a free face (20b) and on the edges (20c) of the preliminary component (10), the dimensions of the release fabric (40) being greater than the dimensions of the preliminary component (10), so that the release fabric (40) covers the whole of the free face (20b), the whole of the edges (20c) of the preliminary component (10), and a portion (50) of the table (30); and
arranging (120-2) a set of edging wedges (60) on the portion (50) of the piece of release fabric (40) that covers the table of the tool.
